# EUROPEAN PATENT APPLICATION

(11) **EP 4 488 710 A1**
(43) Date of publication of application: **08.01.2025**
(21) Application number: 23784253.9
(22) Date of filing: 03.04.2023
(51) Int. Cl.: G01S 7/40, G01S 7/497, G01S 7/52, G06T 7/80

(54) **SENSOR CALIBRATION METHOD AND APPARATUS**

(30) Priority: 06.04.2022 CN 202210360273
(71) Applicant: Huawei Technologies Co., Ltd., Shenzhen, Guangdong 518129 (CN)
(72) Inventor: WU, Chenxing, Shenzhen, Guangdong 518129 (CN); YANG, Jing, Shenzhen, Guangdong 518129 (CN); WANG, Longlong, Shenzhen, Guangdong 518129 (CN)
(74) Representative: Goddar, Heinz J.
(86) International application number: PCT/CN2023/086030
(87) International publication number: WO 2023/193690

(57) **Abstract**

This application provides a sensor calibration method and an apparatus, and relates to the field of communication technologies, to improve sensor calibration efficiency. In the calibration method, a first data frame group is received from a first sensor; a second data frame group is received from a second sensor; whether the first data frame group and the second data frame group correspond to a same target group is determined; and if the first data frame group and the second data frame group correspond to the same target group, the second sensor may be calibrated based on the first data frame group and the second data frame group. In this way, a manner of automatically calibrating a sensor is provided, and manual intervention is not required. This improves sensor calibration efficiency.

## Description

### CROSS-REFERENCE TO RELATED APPLICATIONS

This application claims priority to Chinese Patent Application No. 202210360273.1, filed with the China National Intellectual Property Administration on April 6, 2022 and entitled "SENSOR CALIBRATION METHOD AND APPARATUS", which is incorporated herein by reference in its entirety.

### TECHNICAL FIELD

Embodiments of this application relate to the field of communication technologies, and in particular, to a sensor calibration method and an apparatus.

### BACKGROUND

In a smart road scenario, a plurality of sensors may be installed on a road. A user can monitor and manage a condition of a vehicle on the road through the plurality of sensors. Because data obtained by the plurality of sensors through measurement is not in a same coordinate system, the user cannot intuitively monitor the condition of the vehicle. Therefore, the data collected by the plurality of sensors needs to be converted into data in a same coordinate system, so that the user monitors the vehicle. To convert the data collected by the plurality of sensors into the data in the same coordinate system, some of the plurality of sensors need to be calibrated in advance. Calibration is a process of determining a conversion relationship between a coordinate system of some of the sensors and a specified coordinate system.

At present, the sensor is generally calibrated manually. The following uses an example in which one of two sensors is calibrated and a coordinate system of the other sensor is used as a specified coordinate system to describe a manual manner. In the manual manner, a worker needs to block a road section in which the two sensors are located, and separately place calibration reference objects in areas that can be measured by the two sensors. The two sensors may respectively measure data of the calibration reference objects in respective areas. The worker may determine a calibration parameter of one of the two sensors based on the data obtained through measurement by the two sensors. This is equivalent to calibrating the sensor. However, in the manual manner, a road section in which the calibrated sensor is located needs to be blocked, and a calibration reference object also needs to be disposed in the road section. This results in low sensor calibration efficiency and a complex process.

### SUMMARY

Embodiments of this application provide a sensor calibration method and an apparatus, to improve sensor calibration efficiency.

According to a first aspect, an embodiment of this application provides a sensor calibration method. The method may be performed by a computing apparatus, or may be performed by a chip system. The chip system has a function of the computing apparatus. For ease of description, the following uses an example in which the computing apparatus performs the sensor calibration method for description. The method includes: receiving a first data frame group from a first sensor, where the first data frame group includes at least one data frame; receiving a second data frame group from a second sensor, where the second data frame group includes at least one data frame; determining that both the first data frame group and the second data frame group correspond to a first target group, where the first target group includes at least one target; and determining a calibration parameter of the second sensor based on the first data frame group and the second data frame group, where the calibration parameter of the second sensor is used to convert measurement data measured by the second sensor into data in a coordinate system associated with the first sensor.

In this embodiment of this application, the computing apparatus receives respective data frame groups from two sensors, and may automatically determine whether the two data frame groups correspond to a same target group. In this way, even if the sensor measures a target, for example, a vehicle, on a real traffic road, the computing apparatus can complete a sensor calibration process. In this way, there is no need to separately dispose a calibration reference object, and there is no need to block a road. This simplifies the sensor calibration process, and improves sensor calibration efficiency. In addition, because there is no need to dispose a calibration reference object, and there is no need to block the traffic road, sensor calibration costs are reduced.

In a possible implementation, the first data frame group includes only measurement data of a first target, and the second data frame group includes only measurement data of a second target; and the determining that both the first data frame group and the second data frame group correspond to a first target group includes: if a timestamp of a first data frame is earlier than or equal to a timestamp of a third data frame, and a timestamp of a second data frame is later than or equal to a timestamp of a fourth data frame, determining that both the first target and the second target are a same target in the first target group, where the first data frame group includes the first data frame and the second data frame, the second data frame group includes the third data frame and the fourth data frame, the first data frame includes first measurement data obtained after the first target enters a first area, the second data frame includes first measurement data obtained after the first target leaves the first area, the third data frame includes second measurement data obtained after the second target enters a second area, the fourth data frame includes second measurement data obtained after the second target leaves the second area, and the first area includes the second area.

In a possible implementation, the first data frame group includes only measurement data of a first target, and the second data frame group includes only measurement data of a second target; and the determining that both the first data frame group and the second data frame group correspond to a first target group includes: if an absolute value of a difference between a timestamp of a first data frame and a timestamp of a third data frame is less than or equal to a first threshold, and an absolute value of a difference between a timestamp of a second data frame and a timestamp of a fourth data frame is less than or equal to the first threshold, determining that both the first target and the second target are a same target in the first target group, where the first data frame group includes the first data frame and the second data frame, the second data frame group includes the third data frame and the fourth data frame, the first data frame includes first measurement data obtained after the first target enters a first area, the second data frame includes first measurement data obtained after the first target leaves the first area, the third data frame includes second measurement data obtained after the second target enters a second area, the fourth data frame includes second measurement data obtained after the second target leaves the second area, and the first area is the second area.

In a possible implementation, the first data frame group includes measurement data of a second target group, the second data frame group includes measurement data of a third target group, and the second target group and the third target group each include a plurality of targets; and the determining that both the first data frame group and the second data frame group correspond to a first target group includes: if a timestamp of a first data frame is earlier than or equal to a timestamp of a third data frame, and a timestamp of a second data frame is later than or equal to a timestamp of a fourth data frame, determining that both the second target group and the third target group are the first target group, where the first data frame group includes the first data frame and the second data frame, the second data frame group includes the third data frame and the fourth data frame, the first data frame includes first measurement data obtained after a target that is in the second target group and that first enters a first area enters the first area, the second data frame includes first measurement data obtained after a target that is in the second target group and that last leaves the first area leaves the first area, the third data frame includes second measurement data obtained after a target that is in the third target group and that first enters a second area enters the second area, the fourth data frame includes second measurement data obtained after a target that is in the third target group and that last leaves the second area leaves the second area, and the first area includes the second area.

In a possible implementation, the first data frame group includes measurement data of a second target group, the second data frame group includes measurement data of a third target group, and the second target group and the third target group each include a plurality of targets; and the determining that both the first data frame group and the second data frame group correspond to a first target group includes: if an absolute value of a difference between a timestamp of a first data frame and a timestamp of a third data frame is less than or equal to a first threshold, and an absolute value of a difference between a timestamp of a second data frame and a timestamp of a fourth data frame is less than or equal to the first threshold, determining that both the second target group and the third target group are the first target group, where the first data frame group includes the first data frame and the second data frame, the second data frame group includes the third data frame and the fourth data frame, the first data frame includes first measurement data obtained after a target that is in the second target group and that first enters a first area enters the first area, the second data frame includes first measurement data obtained after a target that is in the second target group and that last leaves the first area leaves the first area, the third data frame includes second measurement data obtained after a target that is in the third target group and that first enters a second area enters the second area, the fourth data frame is second measurement data obtained after a target that is in the third target group and that last leaves the second area leaves the second area, and the first area is the second area.

In a possible implementation, the first data frame group includes measurement data of a second target group, the second data frame group includes measurement data of a third target group, the second target group and the third target group each include a plurality of targets, and the second target group and the third target group include a same quantity of targets; and the determining that both the first data frame group and the second data frame group correspond to a first target group includes: if a timestamp of a first data frame is earlier than or equal to a timestamp of a third data frame, and a timestamp of a second data frame is later than or equal to a timestamp of a fourth data frame, determining that both the second target group and the third target group are the first target group, where the first data frame group includes the first data frame and the second data frame, the second data frame group includes the third data frame and the fourth data frame, the first data frame includes first measurement data obtained after a K^{th} first target enters a first area, the second data frame includes first measurement data obtained after the K^{th} first target leaves the first area, the third data frame includes second measurement data obtained after a K^{th} second target enters a second area, the fourth data frame includes second measurement data obtained after the K^{th} second target leaves the second area, the K^{th} first target is a K^{th} target that is in the second target group and that enters the second area, the K^{th} second target is a K^{th} target that is in the third target group and that enters the second area, K is a positive integer less than or equal to L, L is a total quantity of targets included in the first target group, and the first area includes the second area.

In a possible implementation, the method further includes: determining, from a plurality of pieces of first measurement data in the first data frame group, a first measurement data set that belongs to each target, to obtain a first measurement data set of each of a total of H targets, where H is an integer greater than 1, and one piece of first measurement data is measurement data of one target in one data frame in the first data frame group; and if a quantity of first measurement data included in the first measurement data set of each of the H targets is greater than or equal to a first quantity, determining the H targets as the second target group, where the first quantity is an integer greater than 1.

In a possible implementation, the method further includes: determining, from a plurality of pieces of second measurement data in the second data frame group, a second measurement data set that belongs to each target, to obtain a second measurement data set of each of a total of G targets, where G is an integer greater than 1, and one piece of second measurement data is measurement data of one target in one data frame in the second data frame group; and if a quantity of second measurement data included in the second measurement data set of each of the G targets is greater than or equal to a second quantity, determining the G targets as the third target group, where the second quantity is an integer greater than 1.

In a possible implementation, the method further includes: determining that values of H and G are the same.

In a possible implementation, the method further includes: determining, based on a ranking in which an i^{th} target in the first target group enters the second area, a first measurement data set and a second measurement data set that correspond to the i^{th} target, where i is a positive integer less than or equal to L, and L is a total quantity of targets included in the first target group.

In a possible implementation, the first measurement data set of the i^{th} target includes first measurement data obtained after the i^{th} target enters the first area and first measurement data obtained after the i^{th} target leaves the first area, and the first area includes the second area; and the second measurement data set of the i^{th} target in the first target group includes second measurement data obtained after the i^{th} target enters the second area and second measurement data obtained after the i^{th} target leaves the second area.

In a possible implementation, the method further includes: determining N data frames in the first data frame group, where each of the N data frames corresponds to at least two targets in the first target group, a distance between every two targets of each of the N data frames is greater than a second threshold, N is a positive integer less than or equal to S, and S is a total quantity of data frames included in the first data frame group; and determining M data frames in the second data frame group, where each of the M data frames corresponds to at least two targets of the first target group, a distance between every two targets in each of the M data frames is greater than a third threshold, M is a positive integer less than or equal to T, and T is a total quantity of data frames included in the second data frame group.

In a possible implementation, the determining a calibration parameter of the second sensor based on the first data frame group and the second data frame group includes: determining third measurement data of each target in the first target group at each first timestamp in a first timestamp set based on a part or all of measurement data in a first measurement data set of each target in the first target group, where one first timestamp corresponds to one data frame in the second data frame group; and determining the calibration parameter of the second sensor based on third measurement data and second measurement data that are of each target in the first target group and that are at each first timestamp in the first timestamp set.

In a possible implementation, the first timestamp is a result of calibrating a timestamp of the data frame in the second data frame group based on a time alignment error, where the time alignment error indicates a time difference between timestamps of data frames of the target that are generated by the first sensor and the second sensor respectively when the first sensor and the second sensor measure the target at the same time.

In a possible implementation, the method further includes: receiving a fifth data frame from the second sensor; parsing the fifth data frame to obtain fourth measurement data; and performing coordinate system conversion on the fourth measurement data based on the calibration parameter of the second sensor, to obtain fifth measurement data in the coordinate system associated with the first sensor.

In a possible implementation, the first sensor and the second sensor are sensors of a same type.

In a possible implementation, both the first sensor and the second sensor are millimeter-wave radars, infrared imagers, laser radars, cameras, or sonars. It should be noted that, in this implementation, only a combination manner of the first sensor and the second sensor is described by using an example, but a specific combination manner of the first sensor and the second sensor is not limited actually.

In a possible implementation, the first sensor and the second sensor are sensors of different types.

In a possible implementation, the first sensor is a millimeter-wave radar, and the second sensor is a camera, an infrared imager, a laser radar, or a sonar; the first sensor is a sonar, and the second sensor is an infrared imager, a laser radar, or a camera; the first sensor is an infrared imager, and the second sensor is a camera or a laser radar; or the first sensor is a laser radar, and the second sensor is a camera. It should be noted that, in this implementation, only a combination manner of the first sensor and the second sensor is described by using an example, but a specific combination manner of the first sensor and the second sensor is not limited actually.

The millimeter-wave radar, the laser radar, and the sonar each may include a plurality of components, such as a transmitter, a receiver, and a processor.

According to a second aspect, an embodiment of this application provides an apparatus. The apparatus may be the computing apparatus in the first aspect, an electronic device (for example, a chip system) disposed in the computing apparatus, or a large device including the computing apparatus. The computing apparatus includes a corresponding means (means) or module configured to perform the method according to any implementation of the first aspect. For example, the computing apparatus includes a transceiver module (also referred to as a transceiver unit sometimes) and a processing module (also referred to as a processing unit sometimes).

For example, the transceiver module is configured to: receive a first data frame group from a first sensor, where the first data frame group includes at least one data frame; and receive a second data frame group from a second sensor, where the second data frame group includes at least one data frame; and the processing module is configured to: determine that both the first data frame group and the second data frame group correspond to a first target group, where the first target group includes at least one target; and determine a calibration parameter of the second sensor based on the first data frame group and the second data frame group, where the calibration parameter of the second sensor is used to convert measurement data measured by the second sensor into data in a coordinate system associated with the first sensor.

Optionally, the apparatus further includes another component, for example, an antenna, an input/output module, and an interface. The components may be hardware, software, or a combination of software and hardware.

According to a third aspect, an embodiment of this application provides a sensor calibration system. The calibration system includes the apparatus according to the second aspect. Optionally, the calibration system further includes a first sensor and a second sensor.

According to a fourth aspect, an embodiment of this application provides an apparatus, including a processor and a memory. The memory is configured to store one or more computer programs, the one or more computer programs include computer-executable instructions, and when the apparatus runs, the processor executes the one or more computer programs stored in the memory, to enable the apparatus to perform the method according to any one of the first aspect.

According to a fifth aspect, an embodiment of this application provides a computer-readable storage medium. The computer-readable storage medium is configured to store a computer program, and when the computer program runs on a computer, the computer is enabled to perform the method according to any one of the first aspect.

According to a sixth aspect, an embodiment of this application provides a computer program product. The computer program product stores a computer program, the computer program includes program instructions, and when the program instructions are executed by a computer, the computer is enabled to perform the method according to any one of the first aspect.

According to a seventh aspect, this application provides a chip system. The chip system includes a processor and an interface, the processor is configured to invoke instructions from the interface and run the instructions, and when the processor executes the instructions, the method according to any one of the first aspect is implemented. The chip system may include a chip, or may include the chip and another discrete component.

According to an eighth aspect, an embodiment of this application further provides a computer program. When the computer program runs on a computer, the computer is enabled to perform the method according to any one of the first aspect.

For beneficial effects of the second aspect to the eighth aspect and implementations of the second aspect to the eighth aspect, refer to the descriptions of the beneficial effects of the method in the first aspect and the implementations of the first aspect.

### BRIEF DESCRIPTION OF DRAWINGS

FIG. 1 is a diagram of an application scenario according to an embodiment of this application;
FIG. 2 is a diagram of a basic principle of calibrating a sensor according to an embodiment of this application;
FIG. 3 is a schematic flowchart of a sensor calibration method according to an embodiment of this application;
FIG. 4 is a diagram of a process in which a first sensor and a second sensor measure data according to an embodiment of this application;
FIG. 5 is a diagram of a first area, a second area, a third area, and a fourth area according to an embodiment of this application;
FIG. 6 is a diagram of a plurality of pieces of first measurement data included in a first data frame group according to an embodiment of this application;
FIG. 7 is a diagram of a plurality of pieces of second measurement data included in a second data frame group according to an embodiment of this application;
FIG. 8 is a diagram of a structure of an apparatus according to an embodiment of this application; and
FIG. 9 is a diagram of a structure of an apparatus according to an embodiment of this application.

### DESCRIPTION OF EMBODIMENTS

In the descriptions of embodiments of this application, "a plurality of" means two or more. "At least one" means one or more. The term "and/or" is used to describe an association relationship between associated objects and represents that three relationships may exist. For example, A and/or B may represent the following three cases: Only A exists, both A and B exist, and only B exists. Words such as "first" and "second" are merely used for distinguishing and description, and cannot limit relative importance or a sequence of objects. For example, "first sensor" and "second sensor" represent only two sensors, and do not limit importance of the two sensors.

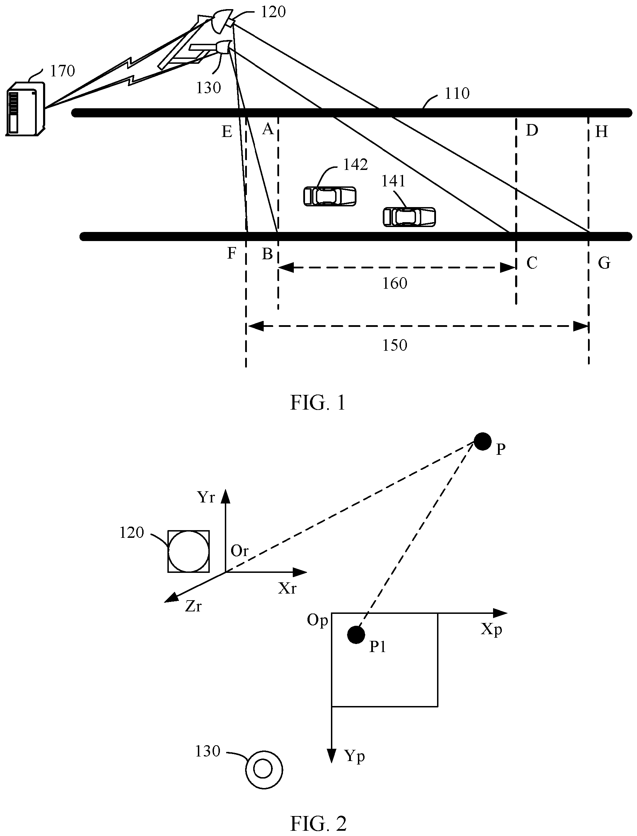

FIG. 1 is a diagram of an application scenario according to an embodiment of this application. As shown in FIG. 1, the application scenario includes at least one to-be-monitored target (a first target 141 and a second target 142 shown in FIG. 1) on a road 110, a plurality of sensors (a first sensor 120 and a second sensor 130 shown in FIG. 1), and a computing apparatus 170. In embodiments of this application, the to-be-monitored target is referred to as a target for short.

It should be noted that the road 110 in this embodiment of this application includes but is not limited to a road in the sea, in the air, or on land. There may be one or more types of targets in this embodiment of this application. For example, a type of the target may be a vehicle, a person, or an animal. There may be one or more targets in this embodiment of this application. In FIG. 1, two vehicles are used as an example. In this embodiment of this application, there may be two or more sensors. In FIG. 1, two sensors are used as an example. The computing apparatus 170 is an apparatus having a computing capability, and includes but is not limited to a personal computer (personal computer, PC), a server, a module having a computing capability, or the like.

The first sensor 120 may measure first measurement data of one or more targets in a third area 150 (an area shown by EFGH shown in FIG. 1) based on a first frame rate. The third area 150 is a space range that can be measured by the first sensor 120 after the first sensor 120 is installed. Information about the third area 150 may be preconfigured in the computing apparatus 170, and the information about the third area is, for example, a plurality of coordinates that form the third area. The first frame rate is a quantity of times of measurement performed by the first sensor 120 in a unit time. The first sensor 120 may further send the first measurement data to the computing apparatus 170 in a form of a data frame. Correspondingly, the computing apparatus 170 receives the data frame from the first sensor 120.

Similarly, the second sensor 130 may measure second measurement data of one or more targets in a fourth area 160 (an area shown by ABCD shown in FIG. 1) based on a second frame rate. The fourth area 160 is a space range that can be measured by the second sensor 130 after the second sensor 130 is installed. Information about the fourth area 160 may be preconfigured in the computing apparatus 170, and the information about the fourth area is, for example, a plurality of coordinates that form the fourth area. The second frame rate is a quantity of times of measurement performed by the second sensor 130 in unit time. The first frame rate and the second frame rate may be the same or different. The third area 150 and the fourth area 160 may completely overlap, or partially overlap. The second sensor 130 may further send the second measurement data to the computing apparatus 170 in a form of a data frame. Correspondingly, the computing apparatus 170 receives the data frame from the second sensor 130.

In this embodiment of this application, the computing apparatus 170 may calibrate the second sensor 130 based on the data frame from the first sensor 120 and the data frame from the second sensor 130. A specific process of calibrating the second sensor 130 is described below.

The first sensor 120 and the second sensor 130 may be sensors of different types. For example, the first sensor 120 is a long-distance sensor, and the second sensor 130 is a short-distance sensor. The long-distance sensor and the short-distance sensor are relative concepts. The long-distance sensor is a sensor with a larger area that can be measured in the two sensors, and the short-distance sensor is a sensor with a smaller area that can be measured in the two sensors. The first frame rate of the first sensor 120 may be different from or the same as the second frame rate of the second sensor 130. Table 1 is a possible example in which the first sensor 120 and the second sensor 130 provided in this embodiment of this application are of different types.

**Table 1**

| Combination number | First sensor 120 | Second sensor 130 |
|---|---|---|
| 1 | Millimeter-wave radar | Camera |
| 2 | Millimeter-wave radar | Infrared imager |
| 3 | Millimeter-wave radar | Laser radar |
| 4 | Millimeter-wave radar | Sonar |
| 5 | Sonar | Infrared imager |
| 6 | Sonar | Laser radar |
| 7 | Sonar | Camera |
| 8 | Infrared imager | Camera |
| 9 | Infrared imager | Laser radar |
| 10 | Laser radar | Camera |

The first sensor 120 and the second sensor 130 may alternatively be sensors of a same type. For example, both the first sensor 120 and the second sensor 130 are long-distance sensors. The first frame rate of the first sensor 120 may be the same as the second frame rate of the second sensor 130. Table 2 is a possible example in which the first sensor 120 and the second sensor 130 provided in this embodiment of this application are sensors of a same type.

**Table 2**

| Combination number | First sensor 120 | Second sensor 130 |
|---|---|---|
| 1 | Sonar | Sonar |
| 2 | Infrared imager | Infrared imager |
| 3 | Laser radar | Laser radar |
| 4 | Millimeter-wave radar | Millimeter-wave radar |
| 5 | Camera | Camera |

In a possible implementation, the computing apparatus 170 in FIG. 1 is an apparatus in a calibration system of a sensor. Optionally, the calibration system of the sensor further includes the first sensor 120 and the second sensor 130.

In a possible implementation, embodiments of this application are applicable to a sensing network. The sensing network includes a plurality of sensors, and the plurality of sensors may perform relatively comprehensive monitoring on a target within a coverage area of the sensing network. For example, the sensing network includes a millimeter-wave radar, a laser radar, a camera, an infrared imager, and a sonar. The millimeter-wave radar, the sonar, and the laser radar may all monitor a location, a moving direction, and the like of the target, the camera and the infrared imager may monitor a shape, a size, and the like of the target, and the camera may further monitor a color and the like of the target.

In a possible implementation, the solutions in embodiments of this application are applicable to various scenarios such as self-driving and assisted driving.

It should be noted that a coordinate system of the sensor may be a coordinate system directly used by measurement data obtained when the sensor measures the target, for example, a world coordinate system used by the millimeter-wave radar or a pixel coordinate system used by the camera. Alternatively, the coordinate system of the sensor may be a coordinate system that has a conversion relationship with a coordinate system directly used by measurement data, for example, a camera coordinate system of the camera (a three-dimensional coordinate system in which a location of the camera is used as an origin), where the camera coordinate system has a conversion relationship with a pixel coordinate system, or a radar coordinate system of the millimeter-wave radar (a three-dimensional coordinate system in which a location of the radar is used as an origin), where the radar coordinate system has a conversion relationship with a world coordinate system. The conversion relationship between the two coordinate systems may be a value (an offset value), or may be a matrix.

In embodiments of this application, for brevity of description, a coordinate system of a first sensor is referred to as a reference coordinate system. The reference coordinate system may be the coordinate system of the first sensor, or may be a coordinate system that has a first conversion relationship with the coordinate system of the first sensor. The two coordinate systems in embodiments of this application mean that the two coordinate systems are used to describe a same point in different manners. For example, the two coordinate systems correspond to different quantities of coordinate axes, and/or the two coordinate systems have different origins.

FIG. 2 is a diagram of a basic principle of calibrating a sensor according to an embodiment of this application. In FIG. 2, a first sensor 120 is a millimeter-wave radar, a second sensor 130 is a camera, a coordinate system of the first sensor 120 is a reference coordinate system, and a target measured by the first sensor 120 and the second sensor 130 is a target P. In FIG. 2, an example in which a computing apparatus is the computing apparatus 170 in FIG. 1, and the computing apparatus 170 calibrates the second sensor 130 is used for description.

The first sensor 120 may measure the target P to obtain measurement data of the target P in a reference coordinate system (Or-Xr-Yr-Zr), for example, a coordinate of the target P in the reference coordinate system. Similarly, the second sensor 130 may measure the target P to obtain measurement data of the target P in a pixel coordinate system (Op-Xp-Yp), for example, a coordinate of the target P in an image.

If the computing apparatus 170 needs to convert the measurement data in the pixel coordinate system into the measurement data in the reference coordinate system, a second conversion relationship between the pixel coordinate system and the reference coordinate system needs to be determined. The second conversion relationship is used to convert the measurement data in the pixel coordinate system into the measurement data in the reference coordinate system. A process in which the computing apparatus 170 determines the second conversion relationship is an example of calibrating the second sensor 130, and the second conversion relationship is an example of a calibration parameter of the second sensor 130.

After obtaining the measurement data that is obtained by the first sensor 120 by measuring the target P and that is in the reference coordinate system and the measurement data that is obtained by the second sensor 130 by measuring the target P and that is in the pixel coordinate system, the computing apparatus 170 may solve the second conversion relationship based on the measurement data of the target P in the reference coordinate system and the measurement data of the target P in the pixel coordinate system.

In another possible implementation, when the coordinate system of the first sensor 120 is not the reference coordinate system, the computing apparatus 170 may perform, based on a first conversion relationship, coordinate system conversion on data obtained by the first sensor 120 by measuring the target P, to obtain data of the target P in the reference coordinate system. For content of the first conversion relationship, refer to the foregoing descriptions. Further, the computing apparatus 170 may solve the second conversion relationship.

When the first sensor 120 and the second sensor 130 are sensors of a same type, the coordinate system of the first sensor 120 is the same as a coordinate system of the second sensor 130. If clock sources of the first sensor 120 and the second sensor 130 are not synchronized, the first sensor 120 and the second sensor 130 synchronously measure a target. Therefore, theoretically, measurement data obtained by the first sensor 120 and the second sensor 130 at a same moment by measuring a same target should be the same. However, actually, the first sensor 120 and/or the second sensor 130 may obtain different measurement data by measuring the same target at the same moment due to an internal reason of a device, external interference, or the like. Therefore, to ensure accuracy of measuring the target by the first sensor 120 and the second sensor 130, in this embodiment of this application, the second sensor 130 may be calibrated based on the measurement data obtained by the first sensor 120 by measuring the target and the measurement data obtained by the second sensor 130 by measuring the target.

For example, the computing apparatus 170 may determine the calibration parameter of the second sensor 130 based on a difference between the measurement data obtained by the first sensor 120 by measuring the target and the measurement data obtained by the second sensor 130 by measuring the target. In this case, the determined calibration parameter of the second sensor 130 may be understood as a calibration value of the sensor, and is used to calibrate the data obtained by the second sensor 130 by measuring the target. It may be further understood that the calibration parameter of the second sensor 130 may be used to convert the measurement data obtained by the second sensor 130 by measuring the target into more accurate measurement data in the reference coordinate system.

Currently, in a solution of manually calibrating a sensor, blocking a road section, disposing a calibration reference, and the like all affect efficiency of calibrating the second sensor. In addition, in a scenario in which a large quantity of sensors need to be calibrated (for example, a sensing network), it is very difficult to manually calibrate the sensors.

In view of this, an embodiment of this application provides a sensor calibration method. In the calibration method, a first data frame group may be received from a first sensor; a second data frame group may be received from a second sensor; a same target group corresponding to both the first data frame group and the second data frame group may be determined; and a calibration parameter of the second sensor may be determined based on the first data frame group and the second data frame group. In this embodiment of this application, after respective data frame groups of two sensors are received, whether the data frame groups corresponding to the two sensors correspond to a same target group may be automatically determined. This implements automatic sensor calibration, and improves sensor calibration efficiency. In addition, the calibration method is applicable to an actual traffic road, and for example, there is no need to block the traffic road or manually dispose a calibration reference object, so that sensor calibration costs can be reduced. In addition, because the sensor calibration method is more efficient and does not require manual intervention, the method in this embodiment of this application is applicable to a scenario in which a large quantity of sensors need to be calibrated.

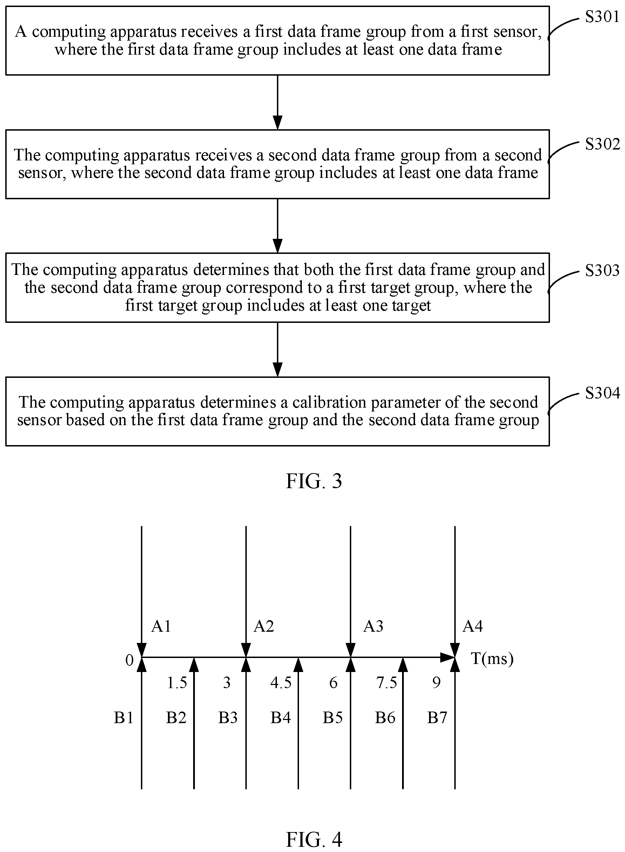

FIG. 3 is a schematic flowchart of a sensor calibration method according to an embodiment of this application. A computing apparatus in FIG. 3 may be the computing apparatus 170 in FIG. 1 or FIG. 2. A first sensor in FIG. 3 may be the first sensor 120 shown in FIG. 1 or FIG. 2, and a second sensor in FIG. 3 may be the second sensor 130 shown in FIG. 1 or FIG. 2.

S301. The computing apparatus receives a first data frame group from the first sensor, where the first data frame group includes at least one data frame.

A first data frame in the first data frame group is used as an example to describe a data frame in the first data frame group. The first data frame includes first measurement data of Su₁ targets, where Su₁ is a positive integer. Specifically, one piece of first measurement data corresponds to one target. For example, first measurement data *Dᵢ* in the first data frame is measurement data of a target i in the Su₁ targets, where i is a positive integer less than or equal to Su₁. The first measurement data *Dᵢ* is data obtained by the first sensor by measuring the target i in one time of measurement. The first measurement data in the first data frame is data in a coordinate system of the first sensor.

For example, the first sensor is a millimeter-wave radar, the coordinate system of the first sensor is a reference coordinate system, and the target is a vehicle. The millimeter-wave radar measures location data (x1, y1, z1) of the vehicle. The location data may be used as first measurement data of the vehicle.

In addition to the first measurement data, the first data frame may further include a timestamp. The timestamp may be any moment between a moment at which the first sensor measures the target to obtain the first measurement data and a moment at which the first sensor sends the first data frame to the computing apparatus. For example, the timestamp is the moment at which the first sensor measures the target to obtain the first measurement data; or the timestamp is the moment at which the first sensor sends the first data frame. For ease of differentiation, a timestamp of each data frame in the first data frame group is referred to as a second timestamp for short below.

It should be noted that, if the first data frame group includes a plurality of data frames, the first sensor may simultaneously send the plurality of data frames to the computing apparatus. Alternatively, the first sensor may separately send the plurality of data frames to the computing apparatus, in other words, the first sensor sends any two of the plurality of data frames at different time.

S302. The computing apparatus receives a second data frame group from the second sensor, where the second data frame group includes at least one data frame.

A third data frame in the second data frame group is used as an example to describe a data frame in the second data frame group. The third data frame includes second measurement data of Su₂ targets, where Su₂ is a positive integer. For a meaning of one piece of second measurement data, refer to the foregoing meaning of one piece of first measurement data. For example, the second sensor is a camera, a coordinate system of the second sensor is a pixel coordinate system, and the target is the vehicle. The camera measures an image including the vehicle. A pixel coordinate of the vehicle in the image is used as second measurement data of the vehicle.

In addition to the second measurement data, the third data frame may further include a timestamp. For a meaning of the timestamp, refer to the foregoing descriptions. For ease of differentiation, a timestamp of each data frame in the second data frame group is referred to as a third timestamp for short below.

It should be noted that, if the second data frame group includes a plurality of data frames, the second sensor may simultaneously send the plurality of data frames to the computing apparatus. Alternatively, the second sensor may separately send the plurality of data frames to the computing apparatus, in other words, the second sensor sends any two of the plurality of data frames at different time.

Optionally, a quantity of data frames included in the first data frame group may be the same as or different from a quantity of data frames included in the second data frame group.

FIG. 4 is a diagram of a process in which a first sensor and a second sensor measure data according to an embodiment of this application. In FIG. 4, an example in which a first frame rate is 333.3 hertz (Hz) and a second frame rate is 666.7 Hz is used.

As shown in FIG. 4, the first sensor sequentially performs measurement at the 0^{th} millisecond (ms), the 3^{rd} ms, the 6^{th} ms, and the 9^{th} ms in a first time period T (that is, the 0^{th} ms to the 9^{th} ms). Correspondingly, the first sensor sequentially generates data frames A1, A2, A3, and A4. The first sensor sends the four data frames to the computing apparatus. Correspondingly, the computing apparatus receives, from the first sensor, a first data frame group including the four data frames. The second sensor sequentially performs measurement at the 0^{th} ms, the 1.5^{th} ms, the 3^{rd} ms, the 4.5^{th} ms, the 6^{th} ms, the 7.5^{th} ms, and the 9^{th} ms in the first time period T. Correspondingly, the second sensor sequentially generates data frames B1, B2, B3, B4, B5, B6, and B7. The second sensor sends the seven data frames to the computing apparatus. Correspondingly, the computing apparatus receives, from the second sensor, a second data frame group including the seven data frames.

It should be noted that a sequence of performing S301 and S302 by the computing apparatus is not limited in this embodiment of this application.

In a possible implementation, the first data frame group includes first measurement data that is of a target in a first area and that is measured by the first sensor. The first area includes all or a part of an area included in a third area of the first sensor. For a meaning of the third area, refer to the foregoing descriptions. In addition, the second data frame group includes second measurement data that is of a target in a second area and that is measured by the second sensor.

A range of the first area varies with a combination manner of the first sensor and the second sensor. The following uses an example for description.
1. If the first sensor and the second sensor are sensors of different types, or if the first sensor and the second sensor are sensors of a same type, but clock sources of the first sensor and the second sensor are not synchronized, the first area includes the second area of the second sensor. In other words, the range of the first area is larger than a range of the second area. The second area is all or a part of an area included in a fourth area of the second sensor. For example, the second area is an overlapping area between the third area and the fourth area. Optionally, the computing apparatus may determine the second area based on information about the third area and information about the fourth area. For meanings of the information about the third area and the information about the fourth area, refer to the foregoing descriptions. For a meaning of the fourth area, refer to the foregoing descriptions.

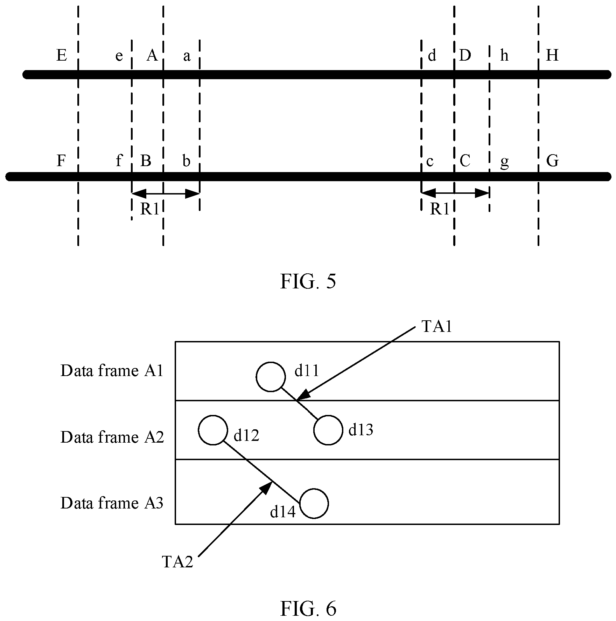

FIG. 5 is a diagram of a first area, a second area, a third area, and a fourth area according to an embodiment of this application. In FIG. 5, an example in which shapes of the first area, the second area, the third area, and the fourth area are all rectangles is used. The third area is an area shown by EFGH in FIG. 5, the third area includes the first area, and the first area is an area shown by efgh shown in FIG. 5. The fourth area is an area shown by ABCD in FIG. 5, the fourth area includes the second area, and the second area is an area shown by abed shown in FIG. 5.

Optionally, if shapes of the first area and the second area are rectangles, the first area is obtained by adding a preset area to the second area. As shown in FIG. 5, a length of the preset area is R1, and two preset areas, that is, an efba area and a dcgh area, are added to a length of the second area to obtain a length of the first area.

A width of the preset area is the same as a width of the second area. The width is a size in a direction that is in the second area and that is perpendicular to a moving direction of the target. The length of the preset area may be determined based on a maximum time alignment error (time alignment error, TAE) of an absolute value between the first sensor and the second sensor and a maximum speed of the to-be-measured target. The length is a size in a direction that is in the second area and that is parallel to a moving direction of the target.

For example, the length of the preset area is a product of the TAE and the maximum speed of the target. The TAE represents a time difference between timestamps of data frames of the target that are generated by the first sensor and the second sensor respectively when the first sensor and the second sensor measure the target at the same time. The TAE includes a first time difference and/or a second time difference. The first time difference is a time difference between the clock sources of the first sensor and the second sensor. The second time difference is a processing time difference between the first sensor and the second sensor from time of measuring the target to time of generating the timestamp. The maximum speed of the to-be-measured target is a maximum speed that a target may reach in a moving process. The maximum speed of the to-be-measured target may be preconfigured in the computing apparatus.

For example, if the to-be-measured target is the vehicle, a maximum speed of the vehicle is 240 km/h, and the TAE between the first sensor and the second sensor is within a range of [-4 ms, 4 ms], a maximum TAE with a maximum absolute value between the first sensor and the second sensor is 4 ms. Correspondingly, a value of the length R1 of the preset area is 4 ms multiplied by 240 km/h, that is, 0.267 m.

It should be noted that, generally, a value of the TAE between the first sensor and the second sensor is small, and therefore, a range of the determined preset area is also small. Generally, the third area is much larger than the fourth area. Therefore, the first area obtained by adding two preset areas to the second area generally also belongs to the third area.

2. If the first sensor and the second sensor are sensors of a same type, and clock sources of the first sensor and the second sensor are synchronized, the first area may be the second area.

For content of the second area, refer to the foregoing descriptions.

In a possible implementation, the second data frame group includes a set of data frames that are of the target in the second area and that are measured by the second sensor.

S303. The computing apparatus determines that both the first data frame group and the second data frame group correspond to a first target group, where the first target group includes at least one target.

The first sensor and the second sensor may not perform synchronous measurement due to different frame rates of the first sensor and the second sensor, interference from an external factor, and the like. Therefore, in this embodiment of this application, when receiving the first data frame group and the second data frame group, the computing apparatus needs to determine whether measurement data in the first data frame group and the second data frame group is obtained by measuring a same target group.

Scenario 1: Data frames in the first data frame group and the second data frame group each include measurement data of only one target. In a case of the scenario 1, a manner in which the computing apparatus implements S303 may include the following steps S1.1 to S1.3.

S1.1. The computing apparatus determines that the first data frame group includes only measurement data of a first target.

The computing apparatus may parse each data frame in the first data frame group. If each data frame in the first data frame group includes only one piece of first measurement data, it indicates that the first sensor measures only one target each time, and it also indicates that there is a high probability that the first sensor continuously measures the target. Therefore, the computing apparatus determines that the first data frame group corresponds to the first target.

To further ensure that the first data frame group corresponds to the first target, in this embodiment of this application, the computing apparatus may determine that two pieces of first measurement data in two adjacent data frames in the first data frame group correspond to a same target. By analogy, the computing apparatus may determine that the first data frame group corresponds to the first target.

A manner in which the computing apparatus determines that two pieces of first measurement data in two adjacent data frames in the first data frame group correspond to a same target is described below.

The following uses an example in which the two adjacent frames are a (Q+1)^{th} data frame and a (Q+2)^{th} data frame in the first data frame group, and an example in which whether first measurement data in the (Q+1)^{th} data frame and first measurement data in the (Q+2)^{th} data frame belong to a same target is determined for description. Q is an integer greater than or equal to 0 and less than or equal to S-1, and S is a total quantity of data frames included in the first data frame group.

For ease of differentiation, the first measurement data in the (Q+1)^{th} data frame is referred to as sixth measurement data, and the first measurement data in the (Q+2)^{th} data frame is referred to as seventh measurement data below.

The computing apparatus predicts, based on the sixth measurement data, data of a target corresponding to the sixth measurement data in a next time of measurement to be performed by the first sensor. The predicted data is referred to as first predicted data. The computing apparatus determines a relationship between an error between the seventh measurement data and the first predicted data and a preset error.

The computing apparatus may determine the first predicted data based on the sixth measurement data, a first speed of the target, and a first time interval of the first sensor. For example, the computing apparatus determines a summation result of the sixth measurement data and a product of the first speed of the target and the first time interval as the first predicted data. The first time interval is a reciprocal of the first frame rate.

The first speed of the target may be a fixed value. For example, a value of the first speed may be preconfigured in the computing apparatus.

Alternatively, the first speed is a real-time speed of the target. For example, if the first sensor is a sonar, a millimeter-wave radar, or a laser radar, the sixth measurement data may include the first speed of the target, and the computing apparatus obtains the sixth measurement data. This is equivalent to obtaining the first speed. Alternatively, the first speed is an average speed of the target. For example, the computing apparatus may calculate the average speed of the target based on first measurement data in a Q^{th} data frame corresponding to the target and the first measurement data in the (Q+1)^{th} data frame corresponding to the target.

If the error between the seventh measurement data and the first predicted data is less than or equal to the preset error, the computing apparatus determines that the sixth measurement data and the seventh measurement data belong to a same target, in other words, correspond to a same target. If the error between the seventh measurement data and the first predicted data is greater than the preset error, it is determined that the sixth measurement data and the seventh measurement data belong to different targets, in other words, correspond to different targets. A value of the preset error may be preconfigured in the computing apparatus, or may be determined based on a length of the target. For example, the value of the preset error is twice the length of the target. The length of the target may be preconfigured in the computing apparatus.

If the seventh measurement data and the first predicted data each include one value, the error between the seventh measurement data and the first prediction data may be an absolute value of a difference between the seventh measurement data and the first predicted data. If the seventh measurement data and the first predicted data each include a plurality of values, the error between the seventh measurement data and the first predicted data may be a Euclidean distance between the seventh measurement data and the first predicted data.

For example, the first data frame group includes data frames A1 and A2. The data frame A1 includes measurement data d11, and the data frame A2 includes measurement data d12. The computing apparatus determines predicted data d11' based on the measurement data d11. The computing apparatus determines that an error between the predicted data d11' and the measurement data d12 is less than or equal to the preset error. Therefore, the computing apparatus determines that both the data frames A1 and A2 correspond to a same target, in other words, determines that the first data frame group corresponds to the first target.

S1.2. The computing apparatus determines that the second data frame group includes only measurement data of a second target.

Similarly, the computing apparatus may parse each data frame in the second data frame group. If each data frame in the second data frame group includes only one piece of second measurement data, the computing apparatus determines that the second data frame group corresponds to the second target.

When the second sensor is a camera or an infrared imager, each data frame in the second data frame group includes an image collected by the second sensor. The computing apparatus may perform image recognition on each image in the second data frame group. If each image in the second data frame group includes only one target, it is determined that the second data frame group corresponds to the second target.

To further ensure that the second data frame group corresponds to the second target, in this embodiment of this application, the computing apparatus may determine that two pieces of second measurement data in two adjacent data frames in the second data frame group correspond to a same target. By analogy, the computing apparatus may determine that the second data frame group corresponds to the second target. For a manner in which the computing apparatus may determine that the two pieces of second measurement data in the two adjacent data frames in the second data frame group correspond to the same target, refer to the foregoing descriptions of determining that the two pieces of first measurement data in the two adjacent data frames in the first data frame group correspond to the same target.

S1.3. The computing apparatus determines that the first target and the second target are a same target.

The computing apparatus determines that the first target and the second target are the same target. This is equivalent to determining that the first data frame group and the second data frame group correspond to a same target group (that is, the first target group).

Scenario 1.1: The first sensor and the second sensor are the sensors of the different types. Alternatively, the first sensor and the second sensor are the sensors of the same type, and the clock sources of the first sensor and the second sensor are not synchronized.

If the timestamp of the first data frame is earlier than or equal to the timestamp of the third data frame, and a timestamp of a second data frame is later than or equal to a timestamp of a fourth data frame, the computing apparatus determines that both the first target and the second target are a same target in the first target group. The first data frame group includes the first data frame and the second data frame, and the second data frame group includes the third data frame and the fourth data frame. The first data frame includes first measurement data obtained after the first target enters the first area, the second data frame includes first measurement data obtained after the first target leaves the first area, the third data frame includes second measurement data obtained after the second target enters the second area, and the fourth data frame includes second measurement data obtained after the second target leaves the second area.

Because the first area includes the second area, a moment at which a target enters the first area should be earlier than or equal to a moment at which the target enters the second area, and a moment at which the target leaves the first area should be later than or equal to a moment at which the target leaves the second area. In this embodiment of this application, if the timestamp of the first data frame is earlier than or equal to the timestamp of the third data frame, it indicates that a moment at which the first target enters the first area is earlier than or equal to a moment at which the second target enters the second area; or if the timestamp of the second data frame is later than or equal to the timestamp of the fourth data frame, it indicates that a moment at which the first target leaves the first area is later than or equal to a moment at which the second target leaves the second area, indicating that motion conditions of the first target and the second target are consistent with motion conditions when the first target and the second target are the same target. Therefore, the computing apparatus determines that the first target and the second target are the same target, and determines that the first data frame group and the second data frame group correspond to the same target, in other words, correspond to the first target group.

Scenario 1.2: The first sensor and the second sensor are the sensors of the same type, and the clock sources of the first sensor and the second sensor are synchronized.

If an absolute value of a difference between the timestamp of the first data frame and the timestamp of the third data frame is less than or equal to a first threshold, and an absolute value of a difference between a timestamp of a second data frame and a timestamp of a fourth data frame is less than or equal to the first threshold, the computing apparatus determines that both the first target and the second target are a same target in the first target group. The first data frame includes data obtained after the first target enters the second area; the second data frame includes data obtained after the first target leaves the second area, the third data frame includes data obtained after the second target enters the second area, and the fourth data frame includes data obtained after the second target leaves the second area. A value of the first threshold may be preconfigured in the computing apparatus. For example, the first threshold is half of the first time interval of the first sensor, and the first time interval is determined based on the first frame rate of the first sensor. For example, the first time interval is the reciprocal of the first frame rate.

When the first sensor and the second sensor are the sensors of the same type, the first frame rate and the second frame rate are the same, and the clock sources of the first sensor and the second sensor are synchronized, the two sensors may measure a same target at different moments due to asynchronous startup time of the two sensors or another reason. In this case, an absolute value of a difference between moments at which the first sensor and the second sensor measure the same target should be less than or equal to the first threshold. Therefore, in this embodiment of this application, if the absolute value of the difference between the timestamp of the first data frame and the timestamp of the third data frame is less than or equal to the first threshold, it indicates that an absolute value of the difference between a moment at which the first target enters the second area and a moment at which the second target enters the second area is also less than or equal to the first threshold, and it is determined that the absolute value of the difference between the timestamp of the second data frame and the timestamp of the fourth data frame is less than or equal to the first threshold, indicates that an absolute value of a difference between a moment at which the first target leaves the second area and the moment at which the second target leaves the second area is also less than or equal to the first threshold, indicating that motion conditions of the first target and the second target are consistent with motion conditions when the first target and the second target are the same target. Therefore, the computing apparatus determines that the first target and the second target are the same target. This is equivalent to determining that both the first data frame group and the second data frame group correspond to the same target, in other words, correspond to the first target group.

In the scenario 1, the computing apparatus determines the first data frame and the second data frame from the first data frame group, and determines the third data frame and the fourth data frame from the second data frame group. Descriptions are provided below.

The computing apparatus may determine, from the measurement data in the first data frame group, one piece of first measurement data whose error with first reference data is less than or equal to a first error, where the first measurement data is measurement data obtained after the first target enters the first area; and use a data frame corresponding to the first measurement data as the first data frame. The first reference data and the first error may be preconfigured in the computing apparatus. The first reference data is theoretically measurement data that is of a target, that corresponds to the first sensor, and that is obtained after the target enters the first area. The first reference data may be determined based on location data of the first sensor and information about the first area.

In addition, the computing apparatus may determine, from the measurement data in the first data frame group, one piece of first measurement data whose error with second reference data is less than or equal to a second error, where the first measurement data is measurement data obtained after the first target leaves the first area; and use a data frame corresponding to the first measurement data as the second data frame. The second reference data and the second error may be preconfigured in the computing apparatus. The second reference data may be theoretically measurement data of a corresponding target measured by the first sensor when the target leaves the first area. For a manner of determining the second reference data, refer to a manner of determining the first reference data. The first error and the second error are the same or different.

Similarly, the computing apparatus may determine, from the measurement data in the second data frame group, one piece of second measurement data whose error with third reference data is less than or equal to a third error, where the second measurement data is second measurement data obtained after the second target enters the second area; and use a data frame corresponding to the second measurement data as the third data frame. The third reference data and the third error may be preconfigured in the computing apparatus. The third reference data is theoretically measurement data that is of a target, that corresponds to the second sensor, and that is obtained after the target enters the second area. For a manner of determining the third reference data, refer to a manner of determining the first reference data.

In addition, the computing apparatus may determine, from the measurement data in the second data frame group, one piece of second measurement data whose error with fourth reference data is less than or equal to a fourth error, where the second measurement data is second measurement data obtained after the second target leaves the second area; and use a data frame corresponding to the second measurement data as the fourth data frame. The fourth reference data and the fourth error may be preconfigured in the computing apparatus. The fourth reference data is theoretically measurement data that is of a target, that corresponds to the second sensor, and that is obtained after the target leaves the second area. For a manner of determining the fourth reference data, refer to a manner of determining the first reference data. The third error and the fourth error are the same or different.

If the first data frame group includes only first measurement data that is of a target in the first area and that is measured by the first sensor, the computing apparatus may determine a data frame with an earliest timestamp in the first data frame group as the first data frame. In addition, the computing apparatus determines a data frame with a latest timestamp in the first data frame group as the second data frame. Similarly, if the second data frame group includes only second measurement data that is of a target in the second area and that is measured by the second sensor, the computing apparatus may determine a data frame with an earliest timestamp in the second data frame group as the third data frame, and the computing apparatus determines a data frame with a latest timestamp in the second data frame group as the fourth data frame.

Scenario 2: Data frames in the first data frame group and the second data frame group each include measurement data of a plurality of targets. In a case of the scenario 2, a manner in which the computing apparatus implements S303 may include the following steps S2.1 to S2.3.

S2.1. The computing apparatus determines that the first data frame group includes only measurement data of a second target group.

The computing apparatus may determine, from measurement data in the first data frame group, a set of first measurement data that belongs to each target (where for ease of description, a set of first measurement data that belongs to one target is referred to as a first measurement data set of the target below). The computing apparatus may obtain, in a cumulative manner, a first measurement data set corresponding to each of H targets. H is an integer greater than 1.

If a quantity of first measurement data included in the first measurement data set of each of the H targets is greater than or equal to a first quantity, it indicates that the first sensor continuously measures the H targets. Therefore, the computing apparatus determines that the first data frame group corresponds to the second target group, in other words, the H targets are the second target group. The first quantity is an integer greater than 1, and a value of the first quantity may be preconfigured in the computing apparatus.

If a quantity of first measurement data included in a first measurement data set of a target is less than the first quantity, it indicates that the first sensor does not continuously measure the target, or it indicates that accuracy of measurement data obtained by the first sensor is low. Therefore, the computing apparatus may discard the first data frame group and the second data frame group that are currently received, and re-perform the method shown in FIG. 3. Alternatively, the computing apparatus may discard the first measurement data set of the target, and use all targets whose quantities of first measurement data included in first measurement data sets are greater than or equal to the first quantity as the H targets.

There may be a plurality of manners in which the computing apparatus determines, from a plurality of pieces of first measurement data, a first measurement data set that belongs to one target. The following describes the manners by using examples.

The computing apparatus determines, from every two adjacent data frames in the first data frame group, two pieces of first measurement data that belong to one target. By analogy, the computing apparatus may determine the first measurement data set corresponding to each of the H targets. Two adjacent data frames are two data frames with adjacent timestamps.

The following uses an example in which the two adjacent frames are a (Q+1)^{th} data frame and a (Q+2)^{th} data frame in the first data frame group, and an example in which whether one piece of first measurement data in the (Q+1)^{th} data frame and one piece of first measurement data in the (Q+2)^{th} data frame belong to a same target is determined for description. Q is an integer greater than or equal to 0 and less than or equal to S-1, and S is a total quantity of data frames included in the first data frame group.

For ease of differentiation, the first measurement data in the (Q+1)^{th} data frame is referred to as eighth measurement data, and the first measurement data in the (Q+2)^{th} data frame is referred to as ninth measurement data below.

The computing apparatus predicts, based on the eighth measurement data, data of a target corresponding to the eighth measurement data in a next time of measurement to be performed by the first sensor. The predicted data is referred to as second predicted data. The computing apparatus determines a relationship between an error between the ninth measurement data and the second predicted data and a preset error.

For a manner of determining the second predicted data by the computing apparatus, refer to the foregoing content of determining the first predicted data.

If the error between the ninth measurement data and the second predicted data is less than or equal to the preset error, the computing apparatus determines that the eighth measurement data and the ninth measurement data belong to a same target, in other words, correspond to a same target. If the error between the ninth measurement data and the second predicted data is greater than the preset error, it is determined that the eighth measurement data and the ninth measurement data belong to different targets, in other words, correspond to different targets. For content of the preset error, refer to the foregoing descriptions.

For a manner of determining the error between the ninth measurement data and the second predicted data, refer to the foregoing content of determining the error between the seventh measurement data and the first predicted data.

With reference to a diagram in which a first data frame group includes a plurality of pieces of first measurement data shown in FIG. 6, the following describes, by using an example, a process in which the computing apparatus performs S2.1.

In FIG. 6, an example in which the first data frame group includes a data frame A1, a data frame A2, and a data frame A3 and the first quantity is 2 is used. The data frame A1 includes measurement data d11; the data frame A2 includes measurement data d12 and measurement data d13; and the data frame A3 includes measurement data d14.

The computing apparatus predicts, based on the measurement data d11 of a target TA1, predicted data d11' corresponding to the target TA1 in a next time of measurement. If an error between the predicted data d 11' and the measurement data d13 is less than or equal to the preset error, the computing apparatus determines that the measurement data d13 corresponds to the target TA1. Further, it is determined that a first measurement data set of the target TA1 includes the measurement data d11 and the measurement data d13.

The computing apparatus determines, based on the measurement data d12 of a target TA2, predicted data d12' corresponding to the target TA2 in a next time of measurement to be performed by the first sensor. If an error between the predicted data d12' and the measurement data d14 is less than or equal to the preset error, it is determined that the measurement data d14 corresponds to the target TA2. Further, it is determined that a second measurement data set of the target TA2 includes the measurement data d12 and the measurement data d14.

The computing apparatus determines that a quantity of first measurement data included in the first measurement data set of the target TA1 is equal to the first quantity, and a quantity of first measurement data included in the first measurement data set of the target TA2 is also equal to the first measurement data. In other words, the computing apparatus determines that the data frame A1, the data frame A2, and the data frame A3 all correspond to the second target group (in other words, the second target group includes the target TA1 and the target TA2).

To further ensure that the first sensor continuously measures the H targets, in a possible implementation, the computing apparatus may determine, from a first measurement data set of an i^{th} target in the H targets, first measurement data obtained after the i^{th} target enters the first area and first measurement data obtained after the i^{th} target leaves the first area. i is a positive integer less than or equal to H, and H is a total quantity of targets included in the second target group.

By analogy, after the computing apparatus traverses each of the H targets, the computing apparatus determines that the first measurement data set of each of the H targets includes first measurement data obtained after the target enters the first area and first measurement data obtained after the target leaves the first area.

For example, if determining that a measurement data set whose error with first reference data is less than or equal to a first error exists in the first measurement data set of the i^{th} target, the computing apparatus determines that the first measurement data obtained after the i^{th} target enters the first area exists in the first measurement data set of the i^{th} target. Similarly, if determining that a measurement data set whose error with second reference data is less than or equal to a second error exists in the first measurement data set of the i^{th} target, the computing apparatus determines that the first measurement data obtained after the i^{th} target leaves the first area exists in the first measurement data set of the i^{th} target. For meanings of the first reference data, the second reference data, the first error, and the second error, refer to the foregoing descriptions.

If the computing apparatus determines that the first measurement data obtained after the i^{th} target enters the first area does not exist in the first measurement data set of the i^{th} target, and/or determines that the first measurement data obtained after the i^{th} target leaves the first area does not exist in the first measurement data set of the i^{th} target, the computing apparatus may discard the first data frame group and the second data frame group, and re-perform the method shown in FIG. 3.

S2.2. The computing apparatus determines that the second data frame group includes only measurement data of a third target group.

The computing apparatus may determine, from the measurement data in the second data frame group, a second measurement data set that belongs to each target, and may obtain, in a cumulative manner, a second measurement data set corresponding to each of G targets. G is an integer greater than 1.

If a quantity of second measurement data included in the second measurement data set of each of the G targets is greater than or equal to a second quantity, it indicates that the second sensor continuously measures the G targets. Therefore, the computing apparatus determines that the second data frame group corresponds to the third target group, in other words, the G targets are the third target group. The second quantity is an integer greater than 1, and a value of the second quantity may be preconfigured in the computing apparatus. The second quantity may be the same as or different from the first quantity.

If a quantity of second measurement data included in a second measurement data set of one of the G targets is less than the second quantity, it indicates that the second sensor does not continuously measure the target, or it indicates that accuracy of measurement data measured by the second sensor is low. Therefore, the computing apparatus may discard the first data frame group and the second data frame group that are currently used, and re-perform the method shown in FIG. 3. Alternatively, the computing apparatus may discard the second measurement data set of the target, and use targets whose quantities of second measurement data included in second measurement data sets are greater than or equal to the first quantity as the G targets.

For a manner in which the computing apparatus determines, from a plurality of pieces of second measurement data, a second measurement data set that belongs to the target, refer to the manner of determining, from the plurality of pieces of first measurement data, the first measurement data set that belongs to the target in S2.1.

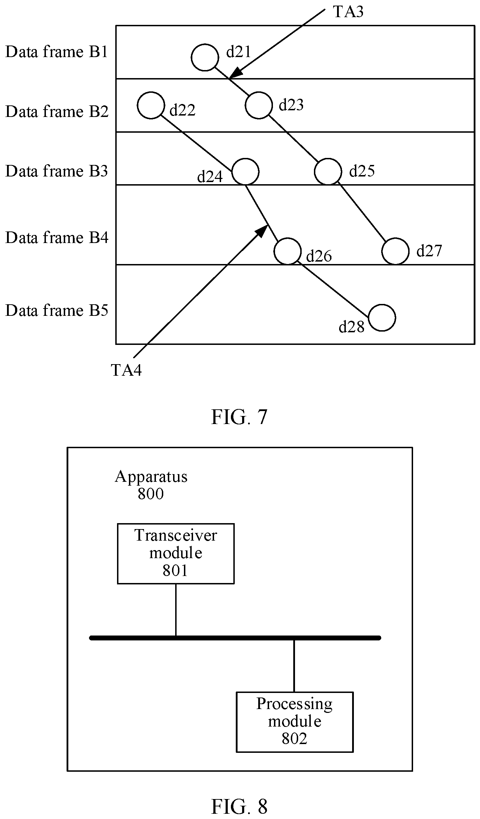

With reference to a diagram in which a second data frame group includes a plurality of pieces of second measurement data shown in FIG. 7, the following describes, by using an example, a process in which the computing apparatus performs S2.2.

In FIG. 7, an example in which the second data frame group includes a data frame B1, a data frame B2, a data frame B3, a data frame B4, and a data frame B5, and a second quantity is 3 is used.

The data frame B1 includes measurement data d21; the data frame B2 includes measurement data d22 and measurement data d23; the data frame B3 includes measurement data d24 and measurement data d25; the data frame B4 includes measurement data d26 and measurement data d27; and the data frame B5 includes measurement data d28.

The computing apparatus may determine that the measurement data d21, the measurement data d23, the measurement data d25, and the measurement data d27 are all second measurement data sets corresponding to a target TA3, and determine that the measurement data d22, the measurement data d24, the measurement data d26, and the measurement data d28 are all second measurement data sets corresponding to a target TA4 in the manner in S2.2.

Because a quantity of second measurement data included in second measurement data set of the target TA3 is greater than the second quantity, and a quantity of second measurement data included in the second measurement data set of the target TA4 is also greater than the second quantity, the computing apparatus determines that the data frame B 1, the data frame B2, the data frame B3, the data frame B4, and the data frame B5 all correspond to the third target group (in other words, the third target group includes the target TA3 and the target TA4).

To further ensure that the second sensor continuously measures G targets, in a possible implementation, the computing apparatus may determine, from a second measurement data set of an i^{th} target in the G targets, second measurement data obtained after the i^{th} target enters the second area and second measurement data obtained after the i^{th} target leaves the second area. i is a positive integer less than or equal to G.

By analogy, after the computing apparatus traverses each of the G targets, it is equivalent to a case in which the computing apparatus determines that the second measurement data set of each of the G targets includes second measurement data obtained after the target enters the second area and second measurement data obtained after the target leaves the second area. For a manner in which the computing apparatus determines the second measurement data obtained after the i^{th} target enters the second area and the second measurement data obtained after the i^{th} target leaves the second area, refer to the foregoing content of determining the first measurement data obtained after the i^{th} target enters the first area.

S2.3. The computing apparatus determines that the second target group and the third target group are a same target group.

The computing apparatus determines that the second target group and the third target group are a same target group. This is equivalent to determining that the first data frame group and the second data frame group correspond to a same target group, that is, the first target group.

Scenario 2.1: The first sensor and the second sensor are the sensors of the different types. Alternatively, the first sensor and the second sensor are the sensors of the same type, but the clock sources of the first sensor and the second sensor are not synchronized.

If the timestamp of the first data frame is earlier than or equal to the timestamp of the third data frame, and a timestamp of a second data frame is later than or equal to a timestamp of a fourth data frame, the computing apparatus determines that both the second target group and the third target group are the first target group. The first data frame group includes the first data frame and the second data frame, and the second data frame group includes the third data frame and the fourth data frame. The first data frame includes first measurement data obtained after a target that is in the second target group and that first enters the first area enters the first area, the second data frame includes first measurement data obtained after a target that is in the second target group and that last leaves the first area leaves the first area, the third data frame includes second measurement data obtained after a target that is in the third target group and that first enters the second area enters the second area, and the fourth data frame includes second measurement data obtained after a target that is in the third target group and that last leaves the second area leaves the second area. The first area includes the second area.

Because the first area includes the second area, a moment at which a target that is in a target group and that first enters the first area enters the first area should be earlier than or equal to a moment at which the target in the target group first enters the second area, and a moment at which a target in the target group last leaves the first area should be later than or equal to a moment at which the target in the target group last leaves the second area. Therefore, in this embodiment of this application, if the timestamp of the first data frame is earlier than or equal to the timestamp of the third data frame, it indicates that a moment at which the target that is in the second target group and that first enters the first area enters the first area is earlier than or equal to a moment at which the target that is in the third target group and that first enters the second area enters the second area. In addition, if the timestamp of the second data frame is later than or equal to the timestamp of the fourth data frame, it indicates that a moment at which the target that is in the second target group and that last leaves the first area leaves the first area is later than or equal to a moment at which the target that is in the third target group and that last leaves the second area leaves the second area. These indicate that motion conditions of the second target group and the third target group are consistent with motion conditions when the second target group and the third target group are the same target group. Therefore, the computing apparatus determines that both the second target group and the third target group are the first target group, and determines that the first data frame group and the second data frame group correspond to the same target group, in other words, correspond to the first target group.

Scenario 2.2: The first sensor and the second sensor are sensors of the same type, and the clock sources of the first sensor and the second sensor are synchronized.

If an absolute value of a difference between the timestamp of the first data frame and the timestamp of the third data frame is less than or equal to a first threshold, and an absolute value of a difference between a timestamp of a second data frame and a timestamp of a fourth data frame is less than or equal to the first threshold, the computing apparatus determines that both the second target group and the third target group are the first target group.

In the foregoing scenarios 2.1 and 2.2, the computing apparatus may determine that a quantity of targets included in the second target group is the same as a quantity of targets included in the third target group, in other words, determine that values of H and G are the same.

In the scenario 2, the computing apparatus determines the first data frame and the second data frame from the first data frame group, and determines the third data frame and the fourth data frame from the second data frame group. Descriptions are provided below.

The computing apparatus may determine, from a plurality of pieces of measurement data in the first data frame group, at least one piece of first measurement data whose error with first reference data is less than or equal to a first error. The computing apparatus determines, from the at least one piece of first measurement data, one piece of first measurement data with an earliest timestamp, where the first measurement data is first measurement data obtained after a target that first enters the first area enters the first area; and uses a data frame corresponding to the first measurement data as the first data frame. A timestamp of one piece of measurement data is a timestamp of a data frame corresponding to the measurement data. The computing apparatus may determine, from the plurality of pieces of first measurement data in the first data frame group, at least one piece of first measurement data whose error with second reference data is less than or equal to a second error. The computing apparatus determines, from the at least one piece of first measurement data, one piece of first measurement data with a latest timestamp, where the first measurement data is first measurement data obtained after a target that last leaves the first area leaves the first area; and uses a data frame corresponding to the first measurement data as the second data frame.

For a manner in which the computing apparatus determines the third data frame and the fourth data frame, refer to the foregoing method in which the computing apparatus determines the first data frame and the second data frame.

If each data frame in the first data frame group includes only measurement data that is of a plurality of targets in the first area and that is measured by the first sensor, the computing apparatus determines a data frame with an earliest timestamp in the first data frame group as the first data frame, and determines a data frame with a latest timestamp in the first data frame group as the second data frame. If each data frame in the second data frame group includes only measurement data that is of a plurality of targets in the second area and that is measured by the second sensor, the computing apparatus determines a data frame with an earliest timestamp in the second data frame group as the third data frame, and determines a data frame with a latest timestamp in the second data frame group as the fourth data frame.

In the foregoing scenario 2, the computing apparatus may alternatively implement S303 in another implementation. Specifically, the implementation may include the following steps S3.1 to S3.4. This implementation is applicable to a case in which the first sensor and the second sensor are the sensors of the same type, or is applicable to a case in which the first sensor and the second sensor are the sensors of the different types.

S3.1. The computing apparatus determines that each first data frame group includes only measurement data of a second target group.

For an implementation of S3.1, refer to related descriptions in S2.1.

S3.2. The computing apparatus determines that each second data frame group includes only measurement data of a third target group.

For an implementation of S3.2, refer to related descriptions in S2.2.

S3.3. The computing apparatus determines that the second target group and the third target group include a same quantity of targets.

For example, the computing apparatus determines a first measurement data set of each of H targets from a plurality of pieces of first measurement data in the first data frame group, and determines a second measurement data set of each of the G targets from a plurality of pieces of second measurement data in the second data frame group. For a manner of determining the first measurement data set of each of the H targets and determining the second measurement data set of each of the G targets, refer to the foregoing descriptions. The computing apparatus further determines that values of H and G are the same. In this way, it is equivalent to a case in which the computing apparatus determines that the second target group and the third target group include the same quantity of targets. For ease of description, an example in which the second target group includes L first targets and the third target group includes L second targets is used below.

Similarly, the computing apparatus may determine, from a first measurement data set of an i^{th} target in the H targets, first measurement data obtained after the i^{th} target enters the first area and first measurement data obtained after the i^{th} target leaves the first area, where i is a positive integer less than or equal to H. Similarly, the computing apparatus may determine, from a second measurement data set of the i^{th} target in the G targets, second measurement data obtained after the i^{th} target enters the second area and second measurement data obtained after the i^{th} target leaves the second area, where i is a positive integer less than or equal to G. For a manner in which the computing apparatus determines the first measurement data obtained after the i^{th} target enters the first area, the first measurement data obtained after the i^{th} target leaves the first area, the second measurement data obtained after the i^{th} target enters the second area, and the second measurement data obtained after the i^{th} target leaves the second area, refer to the foregoing descriptions.

S3.4. If a timestamp of a first data frame corresponding to a K^{th} first target is earlier than or equal to a timestamp of a third data frame corresponding to the K^{th} second target, and a timestamp of a second data frame corresponding to the K^{th} first target is later than or equal to a timestamp of a fourth data frame corresponding to the K^{th} second target, the computing apparatus determines that both the second target group and the third target group are the first target group.

The first data frame group includes the first data frame and the second data frame, and the second data frame group includes the third data frame and the fourth data frame. The first data frame includes first measurement data obtained after the K^{th} first target enters the first area, the second data frame includes first measurement data obtained after the K^{th} first target leaves the first area, the third data frame includes second measurement data obtained after the K^{th} second target enters the second area, and the fourth data frame includes second measurement data obtained after the K^{th} second target leaves the second area. The first area includes the second area. The K^{th} first target may be a K^{th} target that enters the second area in the L first targets (that is, the second target group), and the K^{th} second target may be a K^{th} target that enters the second area in the L second targets (that is, the third target group).

The computing apparatus determines that a moment at which the K^{th} first target enters the first area is earlier than or equal to a moment at which the K^{th} second target enters the second area, and a moment at which the K^{th} first target leaves the first area is later than or equal to a moment at which the K^{th} second target leaves the second area, that is, motion conditions of the K^{th} first target and the K^{th} second target are consistent with motion conditions when the K^{th} first target and the K^{th} second target are a same target. Therefore, the computing apparatus may determine that the K^{th} first target and the K^{th} second target are the same target.

By analogy, when each of the L first targets and one of the L second targets are a same target, it is equivalent to a case in which the computing apparatus determines that the L first targets and the L second targets belong to a same target group, that is, the L first targets and the L second targets are the first target group.

S304. The computing apparatus determines a calibration parameter of the second sensor based on the first data frame group and the second data frame group.

The calibration parameter of the second sensor may be used to convert data measured by the second sensor into data in the reference coordinate system. For a meaning of the reference coordinate system, refer to the foregoing descriptions.

When the first target group has only one target, correspondingly, the first data frame group includes at least one piece of first measurement data of the target, and the second data frame group includes at least one piece of second measurement data of the target. The computing apparatus may directly determine a second conversion relationship between the coordinate system of the second sensor and the reference coordinate system based on the at least one piece of first measurement data of the target and the at least one piece of second measurement data of the target, to obtain the calibration parameter of the second sensor.

When the first target group includes a plurality of targets, after performing S303, the computing apparatus determines a first measurement data set corresponding to each target in the first target group and a second measurement data set corresponding to each target in the first target group. The computing apparatus may associate the first measurement data set of each target in the first target group with the second measurement data set of the target. In other words, the computing apparatus may determine the first measurement data set and the second measurement data set that correspond to each target in the first target group.

For example, the computing apparatus may determine, based on a ranking in which each target in the first target group enters the second area, the first measurement data set and the second measurement data set that correspond to each target in the first target group.

The computing apparatus determines, from the first measurement data set (referred to as L first measurement data sets below for ease of description) corresponding to each target in the first target group, a target first measurement data set including first measurement data obtained after a K^{th} target enters the second area. The computing apparatus determines, from the second measurement data set (referred to as L second measurement data sets below for ease of description) corresponding to each target in the first target group, a target second measurement data set including second measurement data obtained after the K^{th} target enters the second area. The K^{th} target is a K^{th} target that is in the first target group and that enters the second area.

The computing apparatus may determine L pieces of candidate first measurement data from the L first measurement data sets respectively. One piece of candidate first measurement data includes first measurement data obtained after a target enters the second area. The computing apparatus determines, as target first measurement data, candidate first measurement data whose timestamp ranks in a K^{th} place in the L pieces of candidate first measurement data. The computing apparatus determines a first measurement data set corresponding to the target first measurement data as the target first measurement data set. The computing apparatus may determine the target second measurement data set by using a method the same as that for determining the target first measurement data set.

Further, the computing apparatus determines that both the target first measurement data set and the target second measurement data set correspond to the K^{th} target. This is equivalent to determining the first measurement data set and the second measurement data set that correspond to the K^{th} target.

By analogy, the computing apparatus may determine the first measurement data set and the second measurement data set that correspond to each target in the first target group. Further, the computing apparatus may calculate the calibration parameter of the second sensor based on the first measurement data set and the second measurement data set that correspond to each target in the first target group.

For example, still refer to the example shown in FIG. 6. When K is 1, the computing apparatus determines two pieces of candidate first measurement data, including the measurement data d11 and d12, from the target TA1 and the target TA2. The computing apparatus determines that a timestamp corresponding to the measurement data d11 ranks in the first place. Therefore, the computing apparatus determines that a first measurement data set including the measurement data d11 is a first measurement data set corresponding to the 1^{st} target in the first target group.

Still refer to the example shown in FIG. 7. When K is 1, the computing apparatus determines two pieces of candidate second measurement data, including the measurement data d21 and d22, from the target TA3 and the target TA4. The computing apparatus determines that a timestamp corresponding to the measurement data d21 ranks in the first place. Therefore, the computing apparatus determines that the second measurement data set including a measurement data d21 is a second measurement data set corresponding to the 1st target in the first target group. Therefore, the computing apparatus determines that the target TA1 and the target TA3 are a same target, in other words, both the first measurement data set corresponding to the target TA1 and the second measurement data set corresponding to the target TA3 correspond to the 1st target in the first target group. The 1st target is a target that is in the first target group and that first enters the second area.

In the embodiment shown in FIG. 3, after receiving respective data frame groups from two sensors, the computing apparatus may automatically determine whether the respective data frame groups of the two sensors correspond to a same target group. If it is determined that the two data frame groups correspond to the same target group, a calibration parameter of one sensor may be determined based on the two data frame groups. This implements automatic sensor calibration, improves sensor calibration efficiency, and simplifies a sensor calibration process. In addition, for example, because there is no need to block a road section or dispose a calibration reference object, sensor calibration costs can be reduced.

In a possible implementation, the computing apparatus may perform S4.1, in other words, determine N data frames in the first data frame group, where each of the N data frames corresponds to at least two targets in the first target group (which may also be understood as that each of the N data frames includes first measurement data of the at least two targets), and a distance between every two targets in each of the N data frames is greater than a second threshold. N is a positive integer less than or equal to S, and S is a total quantity of data frames included in the first data frame group.

If a distance between two targets in one of the N data frames is greater than the second threshold, it indicates that a difference between actual moving locations of the two targets is large. This helps the computing apparatus more accurately distinguish between first measurement data of the two targets in the data frame. If the first measurement data includes one value, the distance between the two targets may be a difference between respective first measurement data of the two targets in the data frame. If the first measurement data includes a plurality of values, the distance between the two targets may be a Euclidean distance between respective first measurement data of the two targets in the data frame.

If a distance between two targets in a data frame in the first data frame group is less than or equal to the second threshold, it indicates that a difference between actual moving locations of the two targets is small. In this case, the computing apparatus may fail to determine to distinguish between first measurement data of the two targets in the data frame. Therefore, in this case, the computing apparatus may discard the first data frame group and the second data frame group that are currently collected, and re-perform the method shown in FIG. 3.

It should be noted that the computing apparatus may perform S4.1 and S303 in any sequence.

Similarly, the computing apparatus may perform S4.2, in other words, determine M data frames in the second data frame group, where each of the M data frames corresponds to at least two targets in the first target group (which may also be understood as that each of the M data frames includes second data of the at least two targets in the first target group), and a distance between every two targets in each of the M data frames is greater than a third threshold. M is a positive integer less than or equal to T, and T is a total quantity of data frames included in the second data frame group.

It should be noted that the computing apparatus may perform S4.1 and S4.2 in any sequence. In addition, the computing apparatus may perform S4.2 and S303 in any sequence.

When the second sensor is calibrated, whether the first sensor and the second sensor measure a target synchronously may further need to be considered. Descriptions are separately provided below.
1. The first sensor and the second sensor measure the target synchronously.

For example, when the first frame rate of the first sensor and the second frame rate of the second sensor are the same, the clock sources of the first sensor and the second sensor are the same, and there is no startup time difference between the first sensor and the second sensor, the first sensor and the second sensor measure the target synchronously. In this case, the computing apparatus may directly determine the calibration parameter of the second sensor based on first measurement data and second measurement data that correspond to each target in the first target group and that are at a same fourth timestamp.

The fourth timestamp is a timestamp of a data frame in the first data frame group, and is also a timestamp of a data frame in the second data frame group. Alternatively, the fourth timestamp is a result obtained by calibrating a timestamp of a data frame in the second data frame group based on a TAE. For a meaning of the TAE, refer to the foregoing descriptions.

2. The first sensor and the second sensor do not measure the target synchronously.

For example, one or more of the following reasons may cause failure of the first sensor and the second sensor in performing synchronous measurement: The first frame rate of the first sensor is different from the second frame rate of the second sensor, the clock sources of the first sensor and the second sensor are different, and startup time of the first sensor and the second sensor is different. In this case, the computing apparatus may determine, based on a part or all of first measurement data in a first measurement data set of each target in the first target group, third data corresponding to each first timestamp in a first timestamp set. That one first timestamp in the first timestamp set corresponds to one data frame in the second data frame group may be further understood as that the first timestamp is determined based on a timestamp of the data frame in the second data frame group.

For example, the computing apparatus may perform interpolation processing on a part or all of first measurement data in a first measurement data set of a target in the first target group by using the first timestamp as a reference, to obtain third measurement data that is of the target and that is at the first timestamp.

Optionally, if a quantity of first measurement data included in the foregoing part of first measurement data meets a third quantity, it indicates that a quantity of first measurement data participating in the interpolation processing is the third quantity. In addition, a time difference between the first measurement data included in the part of first measurement data and the first timestamp is less than or equal to a first difference. A timestamp of one piece of first measurement data is a timestamp of a data frame corresponding to the first measurement data. The first difference and the third quantity may be preconfigured in the computing apparatus.

For example, a first measurement data set of a target TA5 includes measurement data d31, d32, d33, d34, and d35. Second timestamps corresponding to the five pieces of measurement data are respectively 13:00, 13:02, 13:04, 13:06, and 13:08. For example, a first timestamp t1 is 13:01, the first difference is 3 minutes (min), and the third quantity is 3.

The computing apparatus determines that an absolute value of a difference between the first timestamp and each of the second timestamps of the measurement data d31, d32, and d33 is less than or equal to the first difference. Therefore, the computing apparatus determines to use the measurement data d31, d32, and d33 to determine third measurement data that is of the target and that is at the first timestamp.

According to the foregoing method, the computing apparatus may determine the third measurement data and the second measurement data that are of each target in the first target group and that are at each first timestamp in the first timestamp set. Further, the computing apparatus may determine the calibration parameter of the second sensor based on the third measurement data and the second measurement data that are of each target in the first target group and that are at each first timestamp in the first timestamp set.

The first timestamp in the first timestamp set is a timestamp of a second data frame in the second data frame group; or the first timestamp in the first timestamp set is obtained by calibrating a timestamp of a data frame in the second data frame group based on a TAE. For a meaning of the TAE, refer to the foregoing descriptions. If the TAE exists between the first sensor and the second sensor, the computing apparatus may calibrate a timestamp of a data frame in the second data frame based on the TAE, to obtain a more accurate timestamp.

If a value of the TAE between the first sensor and the second sensor is within a first range, the computing apparatus may determine W TAEs from the first range, where W is an integer greater than or equal to 2. For example, the computing apparatus may determine the W TAEs from the first range based on a preset step size. One or more of W, the first range, and the preset step size may be preconfigured in the computing apparatus.

In this case, the computing apparatus may calibrate a timestamp of a data frame in the second data frame group separately based on the W TAEs, so that W candidate first timestamps corresponding to the data frame in the second data frame group may be obtained.

By analogy, the computing apparatus may obtain W candidate first timestamp sets, where one first timestamp set is a result of calibrating a timestamp of each data frame in the second data frame group based on one TAE.

The computing apparatus may separately determine a calibration parameter of the second sensor in each first timestamp set in the W candidate first timestamp sets. For ease of description, a possible calibration parameter of the second sensor is referred to as a candidate parameter, and the computing apparatus obtains W candidate parameters. The computing apparatus may determine, from the W candidate parameters, one candidate parameter as the calibration parameter of the second sensor.

In a possible implementation, after determining the calibration parameter of the second sensor, the computing apparatus may convert, based on the calibration parameter of the second sensor, the measurement data measured by the second sensor into data in the reference coordinate system.

For example, the computing apparatus receives a fifth data frame of the second sensor, and parses the fifth data frame to obtain fourth measurement data. The computing apparatus performs coordinate system conversion on the fourth measurement data based on the calibration parameter of the second sensor, to obtain fifth measurement data in the reference coordinate system. For a meaning of the reference coordinate system, refer to the foregoing descriptions.

In a possible implementation, the computing apparatus may perform a process of S301 to S304 based on a calibration period to update the calibration parameter of the second sensor in time, to ensure accuracy of the calibration parameter of the second sensor. The calibration period is a period in which the computing apparatus performs calibration processing on the second sensor, and duration of the calibration period may be preset, and is, for example, 15 days or 30 days.

FIG. 8 is a diagram of a structure of an apparatus according to an embodiment of this application.

As shown in FIG. 8, the apparatus 800 includes a transceiver module 801 and a processing module 802. The apparatus 800 may be configured to implement functions of the computing apparatus in the foregoing method embodiments, and therefore can also implement beneficial effects of the foregoing method embodiments.

The transceiver module 801 is configured to receive a first data frame group from a first sensor, and receive a second data frame group from a second sensor. Specifically, the transceiver module 801 is configured to perform steps S301 and S302 in FIG. 3.

A processing module 802 is configured to: determine that both a first data frame group and a second data frame group correspond to a first target group, where the first target group includes at least one target; and determine a calibration parameter of a second sensor based on the first data frame group and the second data frame group, where the calibration parameter of the second sensor is used to convert data measured by the second sensor into data in a coordinate system associated with the first sensor. Specifically, the processing module 802 is configured to perform steps S303 and S304 in FIG. 3.

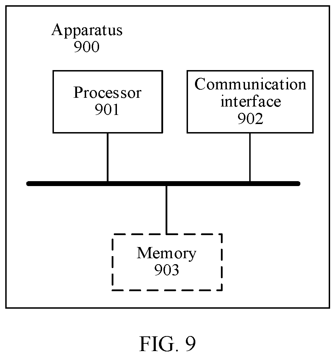

FIG. 9 is a diagram of a structure of an apparatus according to an embodiment of this application.

As shown in FIG. 9, the apparatus 900 includes a processor 901 and a communication interface 902. The processor 901 and the communication interface 902 are coupled to each other. It may be understood that the communication interface 902 may be a transceiver or an input/output interface.

Optionally, the apparatus 900 may further include a memory 903, configured to store instructions executed by the processor 901, store input data required by the processor 901 to run the instructions, or store data generated after the processor 901 runs the instructions. In FIG. 9, a dashed box indicates that the memory 903 is an optional module.

When the apparatus 900 is configured to implement the method shown in FIG. 3, the processor 901 is configured to implement a function of the processing module 802, and the communication interface 902 is configured to implement a function of the transceiver module 801.

It may be understood that the processor in this embodiment of this application may be a central processing unit (Central Processing Unit, CPU), or may be another general-purpose processor, a digital signal processor (Digital Signal Processor, DSP), an application-specific integrated circuit (Application-specific Integrated Circuit, ASIC), a field programmable gate array (Field Programmable Gate Array, FPGA) or another programmable logic device, a transistor logic device, a hardware component, or any combination thereof. The general purpose processor may be a microprocessor or any regular processor or the like.

The method steps in embodiments of this application may be implemented in a hardware manner, or may be implemented in a manner of executing software instructions by the processor. The software instructions may include a corresponding software module. The software module may be stored in a random access memory, a flash memory, a read-only memory, a programmable read-only memory, an erasable programmable read-only memory, an electrically erasable programmable read-only memory, a register, a hard disk, a removable hard disk, a CD-ROM, or any other form of storage medium well-known in the art. For example, a storage medium is coupled to a processor, so that the processor can read information from the storage medium and write information into the storage medium. Certainly, the storage medium may be a component of the processor. The processor and the storage medium may be disposed in an ASIC.

An embodiment of this application provides a chip system. The chip system includes a processor and an interface. The processor is configured to invoke and run instructions from the interface, and when the processor executes the instructions, the sensor calibration method in any one of the foregoing embodiments is implemented.

An embodiment of this application provides a computer-readable storage medium. The computer-readable storage medium is configured to store a computer program or instructions. When the computer program or the instructions are run, the sensor calibration method in any one of the foregoing embodiments is implemented.

An embodiment of this application provides a computer program product. When the computer program product runs on a computer, the sensor calibration method in any one of the foregoing embodiments is implemented.

All or some of the foregoing embodiments may be implemented by using software, hardware, firmware, or any combination thereof. When software is used to implement embodiments, all or a part of embodiments may be implemented in a form of a computer program product. The computer program product includes one or more computer programs or instructions. When the computer programs or instructions are loaded and executed on a computer, the procedures or functions in embodiments of this application are all or partially executed. The computer may be a general-purpose computer, a dedicated computer, a computer network, a network device, user equipment, or another programmable apparatus. The computer program or instructions may be stored in a computer-readable storage medium, or may be transmitted from a computer-readable storage medium to another computer-readable storage medium. For example, the computer program or instructions may be transmitted from a website, computer, server, or data center to another website, computer, server, or data center in a wired or wireless manner. The computer-readable storage medium may be any usable medium that can be accessed by the computer, or a data storage device, for example, a server or a data center, integrating one or more usable media. The usable medium may be a magnetic medium, for example, a floppy disk, a hard disk, or a magnetic tape; or may be an optical medium, for example, a digital video disc; or may be a semiconductor medium, for example, a solid-state drive. The computer-readable storage medium may be a volatile or non-volatile storage medium, or may include two types of storage media: a volatile storage medium and a non-volatile storage medium.

In various embodiments of this application, unless otherwise stated or there is a logic conflict, terms and/or descriptions in different embodiments are consistent and may be mutually referenced, and technical features in different embodiments may be combined based on an internal logical relationship thereof, to form a new embodiment.

It may be understood that various numbers in embodiments of this application are merely used for differentiation for ease of description, and are not used to limit the scope of embodiments of this application. Sequence numbers of the foregoing processes do not mean an execution sequence, and the execution sequence of the processes should be determined based on functions and internal logic of the processes.

## Claims

1. A sensor calibration method, comprising:
receiving a first data frame group from a first sensor, wherein the first data frame group comprises at least one data frame;
receiving a second data frame group from a second sensor, wherein the second data frame group comprises at least one data frame;
determining that both the first data frame group and the second data frame group correspond to a first target group, wherein the first target group comprises at least one target; and
determining a calibration parameter of the second sensor based on the first data frame group and the second data frame group, wherein the calibration parameter of the second sensor is used to convert measurement data measured by the second sensor into data in a coordinate system of the first sensor.

2. The method according to claim 1, wherein the first data frame group comprises only measurement data of a first target, and the second data frame group comprises only measurement data of a second target; and
the determining that both the first data frame group and the second data frame group correspond to a first target group comprises:
if a timestamp of a first data frame is earlier than or equal to a timestamp of a third data frame, and a timestamp of a second data frame is later than or equal to a timestamp of a fourth data frame, determining that both the first target and the second target are a same target in the first target group, wherein the first data frame group comprises the first data frame and the second data frame, the second data frame group comprises the third data frame and the fourth data frame, the first data frame comprises first measurement data obtained after the first target enters a first area, the second data frame comprises first measurement data obtained after the first target leaves the first area, the third data frame comprises second measurement data obtained after the second target enters a second area, the fourth data frame comprises second measurement data obtained after the second target leaves the second area, and the first area comprises the second area.

3. The method according to claim 1, wherein the first data frame group comprises only measurement data of a first target, and the second data frame group comprises only measurement data of a second target; and
the determining that both the first data frame group and the second data frame group correspond to a first target group comprises:
if an absolute value of a difference between a timestamp of a first data frame and a timestamp of a third data frame is less than or equal to a first threshold, and an absolute value of a difference between a timestamp of a second data frame and a timestamp of a fourth data frame is less than or equal to the first threshold, determining that both the first target and the second target are a same target in the first target group, wherein the first data frame group comprises the first data frame and the second data frame, the second data frame group comprises the third data frame and the fourth data frame, the first data frame comprises first measurement data obtained after the first target enters a first area, the second data frame comprises first measurement data obtained after the first target leaves the first area, the third data frame comprises second measurement data obtained after the second target enters a second area, the fourth data frame comprises second measurement data obtained after the second target leaves the second area, and the first area is the second area.

4. The method according to claim 1, wherein the first data frame group comprises measurement data of a second target group, the second data frame group comprises measurement data of a third target group, and the second target group and the third target group each comprise a plurality of targets; and
the determining that both the first data frame group and the second data frame group correspond to a first target group comprises:
if a timestamp of a first data frame is earlier than or equal to a timestamp of a third data frame, and a timestamp of a second data frame is later than or equal to a timestamp of a fourth data frame, determining that both the second target group and the third target group are the first target group, wherein the first data frame group comprises the first data frame and the second data frame, the second data frame group comprises the third data frame and the fourth data frame, the first data frame comprises first measurement data obtained after a target that is in the second target group and that first enters a first area enters the first area, the second data frame comprises first measurement data obtained after a target that is in the second target group and that last leaves the first area leaves the first area, the third data frame comprises second measurement data obtained after a target that is in the third target group and that first enters a second area enters the second area, the fourth data frame comprises second measurement data obtained after a target that is in the third target group and that last leaves the second area leaves the second area, and the first area comprises the second area.

5. The method according to claim 1, wherein the first data frame group comprises measurement data of a second target group, the second data frame group comprises measurement data of a third target group, and the second target group and the third target group each comprise a plurality of targets; and
the determining that both the first data frame group and the second data frame group correspond to a first target group comprises:
if an absolute value of a difference between a timestamp of a first data frame and a timestamp of a third data frame is less than or equal to a first threshold, and an absolute value of a difference between a timestamp of a second data frame and a timestamp of a fourth data frame is less than or equal to the first threshold, determining that both the second target group and the third target group are the first target group, wherein the first data frame group comprises the first data frame and the second data frame, the second data frame group comprises the third data frame and the fourth data frame, the first data frame comprises first measurement data obtained after a target that is in the second target group and that first enters a first area enters the first area, the second data frame comprises first measurement data obtained after a target that is in the second target group and that last leaves the first area leaves the first area, the third data frame comprises second measurement data obtained after a target that is in the third target group and that first enters a second area enters the second area, the fourth data frame is second measurement data obtained after a target that is in the third target group and that last leaves the second area leaves the second area, and the first area is the second area.

6. The method according to claim 1, wherein the first data frame group comprises measurement data of a second target group, the second data frame group comprises measurement data of a third target group, the second target group and the third target group each comprise a plurality of targets, and the second target group and the third target group comprise a same quantity of targets; and
the determining that both the first data frame group and the second data frame group correspond to a first target group comprises:
if a timestamp of a first data frame is earlier than or equal to a timestamp of a third data frame, and a timestamp of a second data frame is later than or equal to a timestamp of a fourth data frame, determining that both the second target group and the third target group are the first target group, wherein the first data frame group comprises the first data frame and the second data frame, the second data frame group comprises the third data frame and the fourth data frame, the first data frame comprises first measurement data obtained after a K^{th} first target enters a first area, the second data frame comprises first measurement data obtained after the K^{th} first target leaves the first area, the third data frame comprises second measurement data obtained after a K^{th} second target enters a second area, the fourth data frame comprises second measurement data obtained after the K^{th} second target leaves the second area, the K^{th} first target is a K^{th} target that is in the second target group and that enters the second area, the K^{th} second target is a K^{th} target that is in the third target group and that enters the second area, K is a positive integer less than or equal to L, L is a total quantity of targets comprised in the first target group, and the first area comprises the second area.

7. The method according to any one of claims 4 to 6, wherein the method further comprises:
determining, from a plurality of pieces of first measurement data in the first data frame group, a first measurement data set that belongs to each target, to obtain a first measurement data set of each of a total of H targets, wherein H is an integer greater than 1, and one piece of first measurement data is measurement data of one target in one data frame in the first data frame group; and
if a quantity of first measurement data comprised in the first measurement data set of each of the H targets is greater than or equal to a first quantity, determining the H targets as the second target group, wherein the first quantity is an integer greater than 1.

8. The method according to claim 7, wherein the method further comprises:
determining, from a plurality of pieces of second measurement data in the second data frame group, a second measurement data set that belongs to each target, to obtain a second measurement data set of each of a total of G targets, wherein G is an integer greater than 1, and one piece of second measurement data is measurement data of one target in one data frame in the second data frame group; and
if a quantity of second measurement data comprised in the second measurement data set of each of the G targets is greater than or equal to a second quantity, determining the G targets as the third target group, wherein the second quantity is an integer greater than 1.

9. The method according to claim 7 or 8, wherein the method further comprises:
determining, based on a ranking in which an i^{th} target in the first target group enters the second area, a first measurement data set and a second measurement data set that correspond to the i^{th} target, wherein i is a positive integer less than or equal to L, and L is a total quantity of targets comprised in the first target group.

10. The method according to claim 9, wherein the first measurement data set of the i^{th} target comprises first measurement data obtained after the i^{th} target enters the first area and first measurement data obtained after the i^{th} target leaves the first area; and
the second measurement data set of the i^{th} target in the first target group comprises second measurement data obtained after the i^{th} target enters the second area and second measurement data obtained after the i^{th} target leaves the second area.

11. The method according to any one of claims 4 to 10, wherein the method further comprises:
determining N data frames in the first data frame group, wherein each of the N data frames corresponds to at least two targets in the first target group, a distance between every two targets of each of the N data frames is greater than a second threshold, N is a positive integer less than or equal to S, and S is a total quantity of data frames comprised in the first data frame group; and
determining M data frames in the second data frame group, wherein each of the M data frames corresponds to at least two targets in the first target group, a distance between every two targets of each of the M data frames is greater than a third threshold, M is a positive integer less than or equal to T, and T is a total quantity of data frames comprised in the second data frame group.

12. The method according to any one of claims 6 to 10, wherein the determining a calibration parameter of the second sensor based on the first data frame group and the second data frame group comprises:
determining third measurement data of each target in the first target group at each first timestamp in a first timestamp set based on a part or all of measurement data in a first measurement data set of each target in the first target group, wherein one first timestamp corresponds to one data frame in the second data frame group; and
determining the calibration parameter of the second sensor based on third measurement data and second measurement data that are of each target in the first target group and that are at each first timestamp in the first timestamp set.

13. The method according to any one of claims 1 to 12, wherein the method further comprises:
receiving a fifth data frame from the second sensor;
parsing the fifth data frame to obtain fourth measurement data; and
performing coordinate system conversion on the fourth measurement data based on the calibration parameter of the second sensor, to obtain fifth measurement data in the coordinate system associated with the first sensor.

14. An apparatus, comprising a processor and a memory, wherein the memory is configured to store one or more computer programs, the one or more computer programs comprise computer-executable instructions, and when the processor executes the one or more computer programs stored in the memory, the apparatus performs the method according to any one of claims 1 to 13.

15. A computer-readable storage medium, wherein the storage medium stores a computer program or instructions, and when the computer program or the instructions are executed by a communication apparatus, the method according to any one of claims 1 to 13 is implemented.
